# DEMANDE DE BREVET EUROPEEN

(11) **EP 1 281 664 A1**
(43) Date de publication de la demande: **05.02.2003**
(21) Numéro de dépôt: 02356135.0
(22) Date de dépôt: 09.07.2002
(51) Int. Cl.: B81B 3/00, G02B 26/02, G02B 26/08

(54) **Procédé de fabrication d'un composant optique microélectromécanique**

(30) Priorité: 31.07.2001 FR 0110228
(71) Demandeur: Memscap, 38926 Crolles (FR)
(72) Inventeur: Helin, Philippe, 38100 Grenoble (FR)
(74) Mandataire: Palix, Stéphane

(57) **Abrégé**

Procédé de fabrication d'un composant optique microélectromécanique (1), réalisé à partir d'un de substrat de silicium, comprenant :
■ des guides de propagation optique (2-5);
■ une paroi mobile (6) par rapport aux guides de propagation (2-5) ;
■ un actionneur électrostatique (10) associé à des moyens de rappel formés par au moins une poutre (15, 16), apte à provoquer le déplacement de la paroi mobile (6) par rapport au reste du substrat

Conformément à l'invention,
■ le substrat utilisé est en silicium monocristallin dont les plans cristallographiques (111) sont parallèles au plan du substrat ;
■ le procédé comporte une première série d'étapes de gravure ionique réactive profonde pendant lesquelles, sont définies, avec des valeurs différentes, les hauteurs de la paroi mobile (6), des électrodes de l'actionneur (11, 12), et des poutres (15, 16) des moyens de rappel de l'actionneur;
■ le procédé comporte une seconde étape de gravure humide, permettant de libérer la paroi mobile (6), les électrodes (11, 12) et les poutres (15, 16) du reste du substrat.

## Description

### Domaine technique

L'invention se rattache au domaine des composants micro-électromécaniques, également appelés "MEMS" pour "Microelectromechanical System". Elle concerne plus particulièrement les composants MEMS utilisés dans les dispositifs de communication par fibres optiques. L'invention vise plus spécifiquement un procédé de fabrication de composants optiques micro-electromécaniques qui permet d'optimiser leurs performances et leur prix de revient. Ce procédé peut servir pour fabriquer différents types de composants optiques, comportant un organe mobile se déplaçant sous l'effet d'un ordre de commande. Il peut s'agir de commutateurs optiques, également appelés "switch", d'obturateurs ou bien encore d'atténuateurs variables.

Dans la suite de la description, l'invention sera plus particulièrement décrite pour un commutateur optique, mais elle pourra être aisément transposable à un obturateur ou un atténuateur optique.

### Techniques antérieures

De façon générale, un commutateur optique reçoit au moins une fibre optique d'entrée et au moins deux fibres optiques de sortie. Ces fibres optiques sont disposées dans des guides de propagation optique orientés les uns par rapport aux autres de façon très précise, le plus généralement à 90° les uns des autres. Le commutateur optique comprend un miroir qui peut se déplacer pour intercepter les faisceaux se propageant des guides de propagation. Lorsque le miroir mobile est dans une première position, il permet la réflexion du faisceau optique issu d'une fibre optique vers une seconde fibre. Lorsque ce miroir est dans une seconde position, il ne modifie pas la propagation du faisceau issu de la première fibre optique, qui se transmet donc dans la fibre optique située dans son alignement.

Le déplacement de ce miroir s'effectue par l'intermédiaire d'un actionneur. Différents types d'actionneurs ont déjà été proposés, et notamment les actionneurs électrostatiques, tels que notamment celui décrit dans le document US 6 229 640. Ce type d'actionneur électrostatique comprend un ensemble d'électrodes réparties en deux peignes interdigités. Ces deux peignes interdigités pénètrent partiellement l'un dans l'autre pour former un condensateur grâce à leurs surfaces en regard. L'application d'une tension électrique entre les deux peignes interdigités provoque un déplacement relatif d'un peigne par rapport à l'autre.

Le miroir étant solidaire d'un des deux peignes d'électrodes, il se déplace sous l'action de cette tension. Le retour en position s'effectue lorsque la tension électrique disparaît, sous l'effet de moyens de rappel qui sont généralement constitués par une ou un ensemble de poutres, qui relient le peigne d'électrodes mobiles au reste du substrat.

Un des objectifs de l'invention est de permettre un déplacement du miroir en utilisant une tension électrique d'une valeur relativement limitée, tout en obtenant une excursion suffisante du miroir. Or, l'emploi de tension de faible valeur incite à augmenter la surface en regard des deux peignes d'électrodes.

Par ailleurs, pour obtenir le déplacement de plus grande amplitude possible, il importe que les moyens de rappel n'exercent pas un effort trop important, et que leur raideur soit donc relativement limitée. Or, cette raideur est déterminée entre autres facteurs par l'épaisseur des poutres qui la constituent. Pour augmenter donc la course du miroir, on est tenté de diminuer l'épaisseur des poutres des moyens de rappel de l'actionneur.

Un problème se pose donc lorsque l'on souhaite combiner les deux effets précités à savoir d'une part l'augmentation de la surface des électrodes et d'autre part, une diminution de l'épaisseur des poutres des moyens de rappel.

Ce genre d'inconvénient s'observe sur les micro-composants réalisés sur des substrats à base de SOI pour "Silicon On Insulator". En effet, sur des substrats SOI, la définition des électrodes et des moyens de rappel de l'actionneur est réalisée par gravure jusqu'à la couche d'oxyde. Les électrodes et les moyens de rappel sont ensuite libérés par une gravure ultérieure, réalisée après la gravure de la couche d'oxyde. Dans ce type de composant réalisé à partir de substrat SOI, les poutres des moyens de rappel et les électrodes ont donc la même hauteur. Pour augmenter l'effort exercé par l'actionneur il est donc nécessaire d'accroître le nombre d'électrodes, ce qui se traduit par une plus forte consommation énergétique de l'actionneur ainsi qu'une plus grande occupation de la surface de substrat.

On a également proposé de réaliser des commutateurs optiques à partir de substrat de silicium monocristallin, également appelés "bulk". Différents procédés ont été développés, qui dépendent de l'orientation cristallographique du substrat utilisé. Ainsi, lorsque le substrat utilisé possède une face supérieure parallèle au plan (100) de la structure cristalline du silicium, il est possible de réaliser dans la même opération la gravure du miroir et des guides de propagation. En effet, grâce à l'orientation des plans cristallins qui forment des plans d'arrêt pour la gravure chimique, il est possible d'obtenir un alignement parfait des guides de propagation situés dans le même axe, ainsi qu'une perpendicularité parfaite des guides de propagation orthogonaux. Toutefois, l'épaisseur du miroir obtenue par cette gravure chimique dépend du temps de gravure. La précision sur l'épaisseur de ce miroir est donc soumise aux variations des conditions dans lesquelles se réalise la gravure. Ainsi, une légère dérive en température peut engendrer une forte imprécision sur l'épaisseur du miroir

On réalise également des opérations de gravure humide en utilisant des substrats dont la face supérieure est parallèle au plan (110) de la structure cristallographique du silicium. Dans ce cas, les plans d'arrêt de la gravure chimique correspondent aux flancs verticaux du miroir, ce qui permet d'obtenir une très bonne précision sur l'épaisseur du miroir.

Cependant, dans ce cas de figure, il est nécessaire de réaliser les guides de propagation dans un second temps, car les axes cristallographiques ne coïncident pas avec les directions de ces guides de propagation. Il faut donc procéder à leur réalisation par une étape ultérieure, nécessitant généralement l'emploi de gravure sèche, du type gravure ionique réactive, ou RIE pour "Reactive Ion Etching".

Un des objectifs de l'invention est donc de permettre la réalisation de composants optiques à partir de silicium monocristallin, et avec un minimum d'étapes.

Dans le document US 6 150 275 on a décrit dans un procédé permettant de réaliser des micro structures à partir de silicium monocristallin dont les plans cristallographiques (111) sont parallèles au plan principal du substrat. Le procédé décrit dans ce document consiste à enchaîner des étapes de gravure sèche, permettant de définir les contours d'une micro structure sur le substrat. Ce procédé se poursuit par une étape de gravure chimique qui permet de libérer la structure prédéfinie par la gravure sèche.

### Exposé de l'invention

L'invention concerne donc un procédé de fabrication d'un composant optique microélectromécanique, qui est réalisé à partir d'un substrat de silicium. Un tel composant optique comprend de façon générale :
■ au moins deux guides de propagation optique, notamment destinés à recevoir des fibres optiques ;
■ une paroi mobile par rapport aux guides de propagation ;
■ un actionneur électrostatique, apte à provoquer le déplacement de la paroi mobile par rapport au reste du substrat, ledit actionneur comportant
   ◆ des électrodes en regard, mobiles les unes par rapport aux autres, une partie des électrodes étant mécaniquement liée à la paroi mobile, l'autre partie des électrodes étant solidaire du reste du substrat ;
   ◆ des moyens de rappel formés par au moins une poutre réalisée dans le substrat, et s'opposant au mouvement des électrodes les unes par rapport aux autres,

Conformément à l'invention, le substrat utilisé est en silicium monocristallin dont les plans (111) sont parallèles aux plans du substrat. Ce procédé comporte tout d'abord, une première série d'étapes de gravure ionique réactive profonde pendant lesquelles sont définies, avec des valeurs différentes, les hauteurs de la paroi mobile, des électrodes de l'actionneur et les poutres des moyens de rappel de l'actionneur. Ce procédé enchaîne par la suite sur une seconde étape de gravure humide, permettant de libérer du reste du substrat la paroi mobile, les électrodes et les poutres de l'actionneur.

Autrement dit, il est possible de réaliser un miroir de hauteur nettement supérieure à la hauteur des électrodes et des poutres des moyens de rappel de l'actionneur. Il est ainsi possible d'optimiser le rapport entre les différentes hauteurs des organes du composant. Ainsi, la hauteur de gravure des électrodes sera choisie supérieure à celle des poutres des moyens de rappel. De la sorte, on augmente la hauteur des électrodes et donc la force qui s'exerce entre les deux ensembles d'électrodes, pour une tension de commande égale. Dans le même temps, en réduisant l'épaisseur des poutres de moyens de rappel, on réduit la raideur de ces derniers, ce qui permet d'augmenter l'excursion du miroir. Cette possibilité est donnée grâce à des gravures ioniques réactives profondes différenciées selon qu'elles définissent les contours des électrodes ou des parois des moyens de rappel.

La profondeur de la gravure ionique réactive profonde mise en oeuvre pour définir le miroir peut être choisie de différentes façons. Ainsi, cette profondeur peut être choisie de façon à ce que la fibre optique puisse être totalement incluse dans le guide de propagation, ce qui facilite les phases ultérieures d'encapsulation.

La profondeur de cette première gravure peut également être inférieure, dès lors qu'elle est suffisante pour assurer l'interception par le miroir du faisceau issu des fibres optiques. Dans ce cas, la zone réfléchissante du miroir se situant à proximité de la face supérieure du substrat, elle présente une meilleure planéité et verticalité, et donc de meilleures propriétés réfléchissantes.

En pratique, préalablement aux étapes de gravure ionique réactive profonde, on procède à une étape de masquage permettant de définir l'emplacement ultérieur des guides de propagation optique de la paroi mobile, des électrodes et des moyens de rappel de l'actionneur. Le masquage peut par exemple avoir lieu par dépôt d'une couche SiO₂ par exemple par des techniques de PECVD pour "Plasma Enhanced Chemical Vapor Deposition". Cette couche est ensuite configurée par une méthode classique de lithographie, puis de gravure.

Avantageusement en pratique, le procédé comporte deux étapes de gravure réactive profonde successives, à savoir :
■ une première étape de gravure ionique réactive profonde pendant laquelle sont définies les hauteurs de la paroi mobile, des électrodes et des moyens de rappel de l'actionneur ;
■ une seconde étape de gravure ionique réactive profonde pendant laquelle sont définis les volumes à partir desquels peuvent s'initier l'étape subséquente de gravure humide.

En pratique, entre ces deux étapes de gravure ionique réactive profonde, on procède :
■ tout d'abord à un dépôt conformal, d'une couche de SiO₂ dans les zones gravées par la première étape de la gravure ;
■ puis à une élimination de cette couche de SiO₂ dans le fond des zones initialement gravées.

Par dépôt "conformal", on entend que le dépôt s'effectue sur toute la surface apparente du substrat, avec une épaisseur constante.

C'est dans le fond de ces zones que s'effectuera l'étape ultérieure de gravure ionique réactive permettant de définir les volumes à partir desquels pourront débuter l'étape de gravure humide.

Après l'étape de gravure humide on procède à une étape de métallisation, qui permet de rendre la paroi mobile réfléchissante. Cette étape permet de métalliser également les électrodes, ce qui permet l'application de la tension de commande.

Selon une autre caractéristique de l'invention, pendant les étapes de gravure ionique réactive profonde, on définit un ensemble de poutrelles de protection, situées de part et d'autre des poutres faisant partie des moyens de rappel de l'actionneur. Ces poutrelles sont reliées aux poutres par l'intermédiaire de portions de liaison de dimensions réduites. Ces poutrelles sont ensuite libérées du reste du substrat lors de l'étape de gravure humide. Ces poutrelles de protection, disposées de chaque côté des poutres des moyens de rappel permettent de d'augmenter les effets de charge lors de la gravure profonde du substrat.

En effet, pour obtenir une excursion suffisante du miroir, il est nécessaire que les moyens de rappel se déforment de façon relativement importante. Certaines parties des poutres des moyens de rappel se déplacent donc d'une distance sensiblement équivalente à celle parcourue par le miroir.

Les poutres des moyens de rappel sont donc situées dans des espaces largement dégagés. Or, on sait que la profondeur d'une gravure ionique réactive profonde est fonction de la superficie des motifs gravés. Les motifs de plus faible surface sont gravés moins profondément que les motifs de plus grandes dimensions. Ce phénomène, connu sous le nom d"'effet de charge", est utilisé lors de la définition des poutres de moyens de rappel, pour rendre compatibles deux facteurs qui semblent a priori contradictoires que sont d'une part la précision recherchée sur les dimensions des poutres et d'autre part la largeur du dégagement dans lequel sont situées ces poutres.

En effet, la section des poutres des moyens de rappel est un paramètre prépondérant dans la détermination de la raideur de ces moyens de rappel. Pour obtenir une raideur précise, il convient donc de maîtriser la section de ces poutres des moyens de rappel. Pour ce faire, on définit le contour précis des poutres grâce à des motifs de très faible largeur. A l'extérieur de ces motifs, on réalise les poutrelles de protection, qui seront plus exposées à la gravure réactive ionique profonde dans l'espace relativement dégagé qui entoure les poutres des moyens de rappel. Les phénomènes d'effet de charge lors de la gravure ionique réactive profonde s'observent donc dans les motifs de faible largeur séparant les poutres des poutrelles.

La profondeur de gravure ionique réactive sera différente sur les deux côtés des poutrelles de protection. Ainsi, du côté des poutrelles en regard de l'espace dégagé dans lequel se déplaceront les moyens de rappel, la gravure sera relativement profonde. A l'inverse, du côté des poutrelles venant au regard des poutres des moyens de rappel, cette gravure sera nettement moins profonde, de manière à réaliser une poutre d'épaisseur réduite, présentant donc une raideur plus contrôlée et donc optimisée. L'utilisation des poutrelles de protection permet donc la création d'un niveau supplémentaire de profondeur de gravure, et le contrôle de la section donc de la raideur des poutres.

Les poutrelles étant reliées à la poutre par des zones de liaison de très faibles dimensions, elles n'interviennent quasiment pas dans la détermination de la raideur de la poutre, mais jouent le rôle de masselottes réparties sur la longueur de la poutre.

Le procédé conforme à l'invention peut être employé pour obtenir différents types de composants optiques. Il peut s'agir de composants du type obturateur ou atténuateur variable qui possèdent deux guides de propagation optique colinéaires.

Il peut également s'agir de composants du type commutateur ou "switch" incorporant deux paires de guides de propagation colinéraires, une paire étant perpendiculaire à l'autre. Dans ce cas, le miroir se déplace dans un plan à 45° par rapport au guide de propagation.

Grâce à l'optimisation du compromis entre la raideur des moyens de rappel et le volume des électrodes, on obtient un actionneur de taille nettement plus réduite que celui de l'Art antérieur. Il est donc possible de rapprocher les guides de propagation optique de manière suffisante pour réaliser des commutateurs multiples à base de cellules élémentaires sous forme de matrices, en augmentant la concentration et la densité d'intégration de cellules de commutation élémentaires.

### Description sommaire des figures

La manière de réaliser l'invention ainsi que les avantages qui en découlent ressortiront bien de la description du mode de réalisation qui suit, à l'appui des figures annexées dans lesquelles :
La figure 1 est une vue en perspective sommaire de la zone principale d'un commutateur optique réalisé conformément à l'invention.
Les figures 2a à 2h sont des vues en coupe transversale de zones où sont réalisées un organe élémentaire de la structure d'un micro-composant réalisé conformément à l'invention, et selon différentes étapes successives du procédé.
Les figures 3a à 3c sont des vues en coupe transversales montrant la réalisation de trois niveaux de profondeur par gravure, par exemple de la paroi mobile, des électrodes et des poutres, au fur et à mesure du procédé de réalisation.
Les figures 4 à 4b, 4c sont des vues en coupe transversales montrant les différentes étapes de réalisation des électrodes.
La figure 5 est une vue de dessus de la zone comportant les électrodes illustrées aux figures 4a et 4c.
Les figures 6a à 6c sont des vues en coupe transversale de la zone de la poutre des moyens de rappel, montrée au fur et à mesure des étapes du procédé conforme à l'invention.
La figure 7 est une vue de dessus partielle de la zone de la poutre des moyens de rappel.
La figure 8 est une vue en perspective sommaire de la zone de la figure 7.
Les figures 9 et 10 sont des vues en coupe transversales de deux guides de propagation réalisés conformément à deux variantes de réalisation

### Manière de réaliser l'invention

Comme déjà évoqué, l'invention concerne un procédé de fabrication d'un micro composant optique qui peut être de différents types. Il peut par exemple s'agir d'un commutateur ou "switch" comme dans les formes de réalisation illustrées, mais également d'un obturateur ou d'un atténuateur variable.

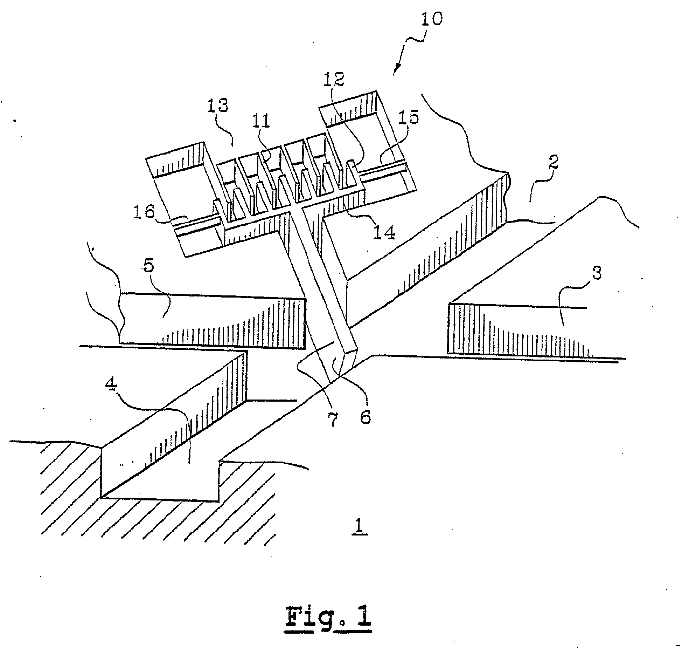

De façon générale, un commutateur optique (1) tel qu'illustré à la figure 1 comporte quatre guides de propagation optique (2, 3, 4, 5). Ces quatre guides de propagation (2-5) sont rassemblés par paires, de guides colinéaires. Ainsi, les deux guides (2, 4) sont dans l'alignement d'un autre, tout comme le sont les guides de l'autre paire (3, 5). Ces deux paires de guides (2-5) sont perpendiculaires l'une par rapport à l'autre. Ces guides de propagation (2-5) sont destinés à accueillir des fibres optiques non représentées à la figure 1, permettant l'acheminement d'un signal sous forme d'un faisceau lumineux.

Ces guides de propagation (2-5) peuvent éventuellement accueillir des organes de collimation permettant de focaliser les faisceaux issus des fibres optiques.

De façon essentielle, le commutateur optique (1) comprend également une paroir mobile (6) formant un miroir dont la face (7) est réfléchissante pour permettre la réflexion du faisceau cheminant dans le guide d'entrée (4) à destination du guide de sortie (5). Ce miroir (6) est apte à se déplacer parallèlement au plan principal du substrat, et dans une direction faisant un angle de 45° avec les directions des guides. Cette orientation de 45°, si elle n'est pas totalement obligatoire, constitue néanmoins un optimum en terme de diaphonie, de qualité de réflexion et d'occupation de surface de silicium.

Le déplacement du miroir (6) est assuré par un actionneur (10). Cet actionneur comporte une pluralité d'électrodes (11, 12) rassemblées en deux peignes interdigités. Ainsi, une partie des électrodes (11) est solidaire du reste du substrat, et forme des plaques orientées perpendiculairement au plan principal du substrat. L'actionneur comprend également des électrodes mobiles (12), également agencées sous forme d'un peigne de plaques perpendiculaires au plan du substrat. Ces électrodes (12) sont intercalées entre les électrodes (11) du peigne fixe. Les surfaces en regard des électrodes (11, 12) des peignes fixe et mobile constituent un condensateur. L'application d'une tension entre les électrodes (11, 12) permet de générer une force de nature électrostatique provoquant le déplacement du peigne mobile (14) par rapport au peigne fixe (13).

Le mouvement du peigne mobile (14) par rapport au peigne (13) est contrarié par la présence de moyens de rappel constitués par deux poutres (15, 16) reliant le peigne mobile (14) au reste du substrat. Ces poutres (15, 16) subissent des déformations sous l'effet de la force électrostatique précitée, et ramènent le peigne mobile (14) dans sa position de repos lorsque cette force électrostatique a disparu. Les poutres (15,16) illustrées à la figure 1 sont particulièrement simplifiées par rapport à la réalité, dans le seul but de faciliter la compréhension des dessins. Bien entendu, l'invention couvre de multiples variantes de réalisation des moyens de rappel dans lesquels l'amplitude de déplacement est nettement supérieure à celle que l'on pourrait obtenir grâce aux poutres illustrées à la figure 1.

De façon générale, le procédé conforme à l'invention ne se limite pas à la réalisation de commutateurs tels qu'illustrés à la figure 1, dont la structure n'est donnée qu'à titre d'exemple. Le procédé conforme à l'invention peut au contraire être appliqué à un très grand nombre de structures mécaniques différentes, dès lors qu'elles emploient les organes principaux évoqués ci-avant, à savoir une paroi mobile formant un miroir, des électrodes dont une partie est mobile et l'autre fixe, et des moyens de rappel formés d'une ou plusieurs poutres. Différentes géométries ou conceptions peuvent donc être réalisées conformément à l'invention.

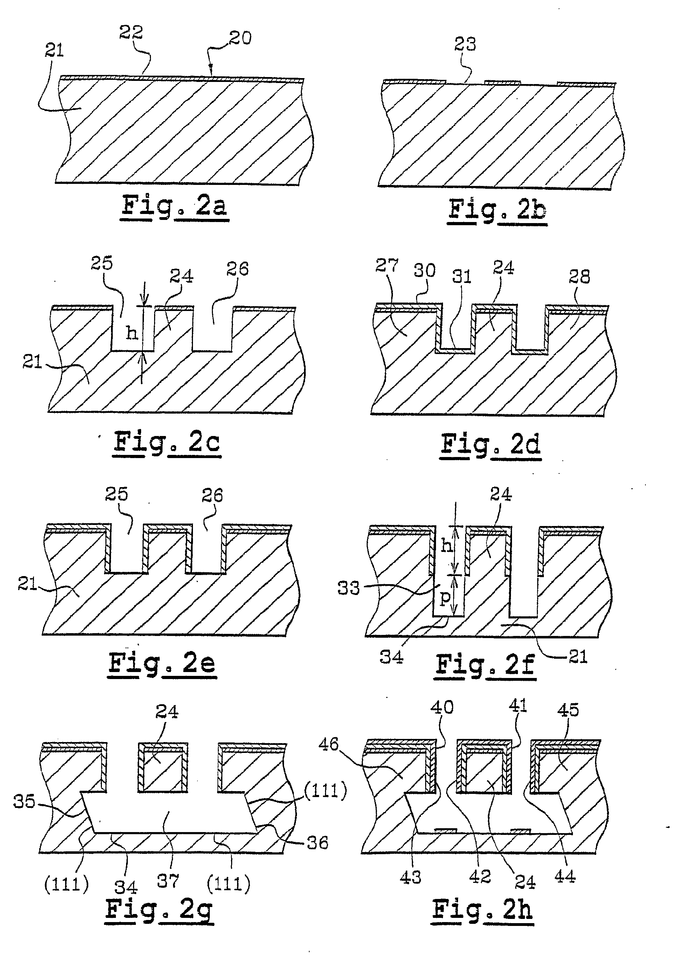

Le procédé conforme à l'invention sera bien compris à l'appui des figures 2a à 2h. Tout d'abord, le substrat utilisé doit être à base de silicium monocristallin, également appelé silicium "bulk". On choisit un substrat de silicium monocristallin dont les plans cristallins (111) sont parallèles au plan principal du substrat (20). Dans une première étape, le substrat (21) est recouvert d'une couche (22) de silice SiO₂.

Cette couche est déposée par tout procédé connu, et notamment par un procédé connu sous l'abréviation de PECVD pour "Plasma Enhanced Chemical Vapor Deposition". Cette couche de SiO₂ (22) sert de masque pour une étape de gravure ionique réactive profonde, également appelée DRIE pour "Deep Reactive Ion Eching" et appelée dans la suite de la description"gravure profonde". Les motifs sont dessinés sur cette couche de SiO₂ (22) par des méthodes classiques de lithographie et de gravure, comme illustré à la figure 2b.

Par la suite, on procède à une première étape de gravure profonde du substrat de silicium (21) à l'aplomb des motifs (23) réalisé sur la couche de SiO₂. Cette étape permet de définir la hauteur h de la portion (24) qui sera ensuite libérée. Les deux zones (25, 26) sont donc gravées avec la profondeur correspondant à la hauteur de la structure à libérer (24). Par la suite, et comme illustré à la figure 2d, on procède au dépôt d'une couche de SiO₂ (30). Ce dépôt est réalisé de façon conformal pour assurer un recouvrement des flancs verticaux de la zone à libérer (24) et des zones adjacentes (27, 28). Cette couche (30) sert de protection au substrat de silicium pour l'étape ultérieure de gravure sèche anisotropique, illustrée à la figure 2e. Lors de cette étape, la couche conformale (30) de SiO₂ est gravée au niveau du fond (31) des zones évidées (25, 26). Cette étape de gravure laisse donc apparaître le substrat (21) au niveau du fond de ces zones gravées (25, 26).

On procède par la suite, et comme illustré à la figure 2f, à une seconde étape de gravure sèche profonde. Cette seconde gravure profonde est effectuée sur une profondeur p, qui définira l'écart entre la structure à libérer (24) et le reste du substrat (21). Cette profondeur p peut être ajustée selon le type de structure que l'on peut obtenir. La maîtrise de cet écart p permet notamment d'éviter les problèmes de collage entre les structures mobiles et le reste du substrat.

On procède par la suite comme illustré à la figure 2g à une étape de gravure humide anisotropique. Cette gravure humide est initiée à partir de la zone (33) qui a été gravée par la seconde étape de gravure profonde. La gravure anisotropique peut être du type à la soude (NaOH) ou au tétraméthyl d'hydroxyde d'ammonium (TMAH) ou à l'éthylène diamine pyrocatechol (EDP).

Le choix de l'orientation cristallographique du substrat présente une importance toute particulière pour cette étape du procédé. En effet, les familles de plans (111) présentent une sélectivité très importante par rapport aux autres familles de plan (100) ou (110), dans le cas de gravures anisotropiques évoquées. Les plans (111) constituent donc des plans d'arrêt pour la gravure. Le fond (34) de la zone (33) préalablement gravé étant un plan de la famille (111), il ne sera donc quasiment pas surgravé. La sous-gravure s'effectue donc de façon latérale. La sous-gravure est limitée par les plans (35, 36) qui appartiennent à la famille des plans (111). Ces plans forment un hexagone dans cette orientation cristallographique avec un angle de 19,4° entre les plans horizontaux (34) et les plans de l'hexagone (35, 36). Cette étape de gravure est prolongée jusqu'à ce que l'intégralité du substrat soit éliminé en dessous de la zone à libérer (24).

Cette étape de gravure anisotrope humide définit donc une zone ouverte (37), située en dessous de la structure à libérer (24). Par la suite et comme illustré à la figure 2h, on procède à une métallisation de la gaine de substrat. Cette métallisation permet donc le dépôt d'une couche (40) de métal à la fois sur la face supérieure du substrat mais également sur les flancs (41, 42) de la zone libérée (24), ainsi que sur les flancs en regard (43, 44) des zones adjacentes (45, 46).

Cette métallisation permet d'assurer le pouvoir réflecteur nécessaire lorsque la structure libérée (24) sert de miroir. Lorsque la structure libérée (24) est utilisée en tant qu'électrode dans l'actionneur électrostatique, cette métallisation assure l'équipotentialité de chaque peigne.

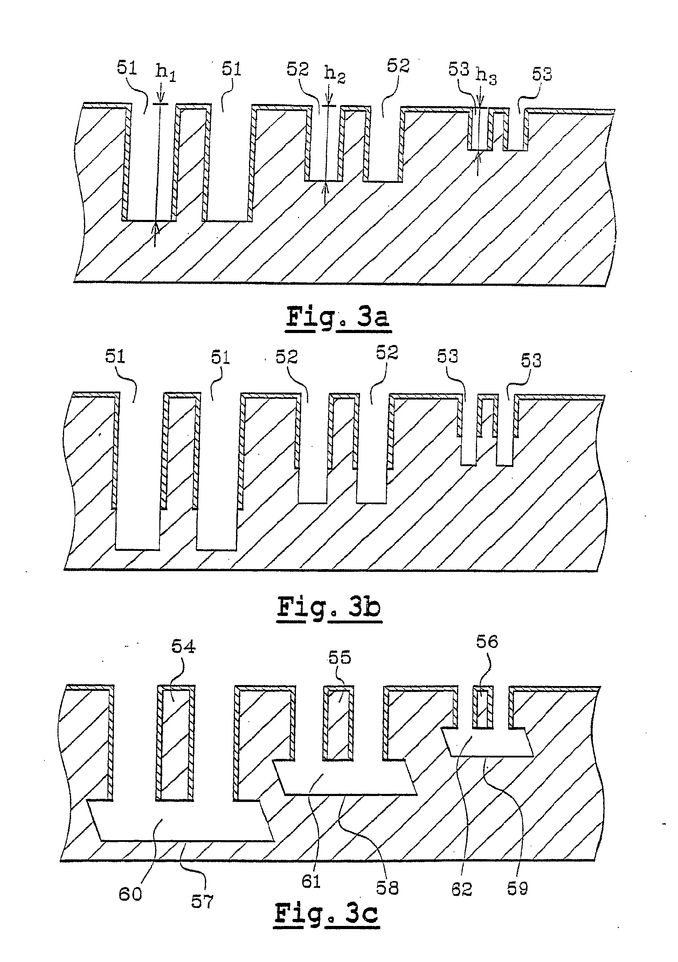

Le procédé conforme à l'invention permet de définir différents niveaux de hauteur en ce qui concerne les structures mobiles à l'intérieur du composant. Ainsi, comme illustré à la figure 3, le procédé décrit en détail dans les figures 2a à 2h peut être mis en oeuvre en réalisant une première étape de gravure profonde avec des niveaux de gravure différente grâce aux effets de charge. Ainsi, comme illustré à la figure 3a, lors de la première étape de gravure profonde, on détermine des zones (51, 52, 53) présentant des profondeurs h₁, h₂, h₃ différentes les unes des autres.

Après un dépôt conformal de SiO₂ et une gravure anisotropique du fond des zones (51-53) non représentées, on procède comme illustré à la figure 3b à une seconde gravure profonde du fond des zones préalablement gravées (51-53). Cette seconde étape de gravure profonde peut avoir lieu à des profondeurs différentes selon le type de structure à réaliser. Comme déjà évoqué, cette seconde étape de gravure profonde permet de déterminer la distance qui séparera les structures libérées (54, 55, 56) du fond (57, 58, 59) de la cavité (60, 61, 62) qui les reçoit.

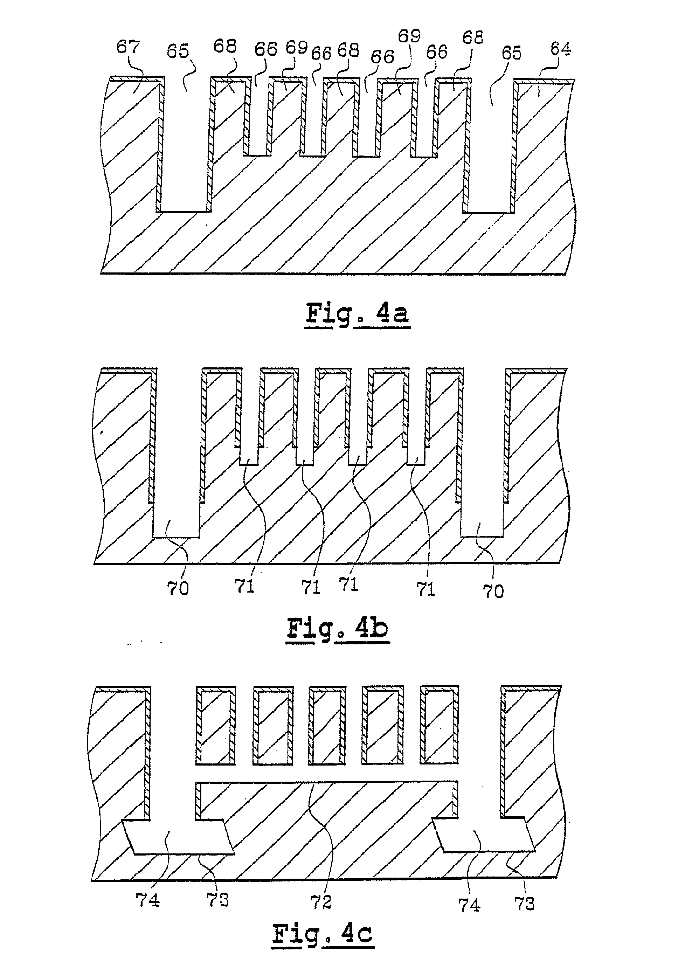

Dans le cas particulier de la formation des électrodes illustrées aux figures 4a à 4c, on réalise une première étape de gravure pour former des zones (65, 66) de profondeur différente. Les zones extérieures (65) sont plus profondément gravées pour permettre de définir des structures (67) de plus grande épaisseur, à l'extérieur des futures électrodes (68, 69).

Lors de la seconde étape de gravure profonde illustrée à la figure 4b, les zones (65, 66) sont gravées pour définir des zones (70, 71) où pourra s'initier l'étape ultérieure de gravure humide illustrée à la figure 4c. Lors de cette gravure humide, les différentes zones (71) sont élargies dans le plan du substrat jusqu'à se rejoindre pour libérer les différentes électrodes (68, 69), et définir un palier (72) au dessus duquel seront situées les électrodes (68, 69). Ce palier (72) se trouve à un niveau plus élevé que le fond (73) de l'évidement (74) réalisé par la gravure humide des zones (70) situées latéralement par rapport aux électrodes (68, 69).

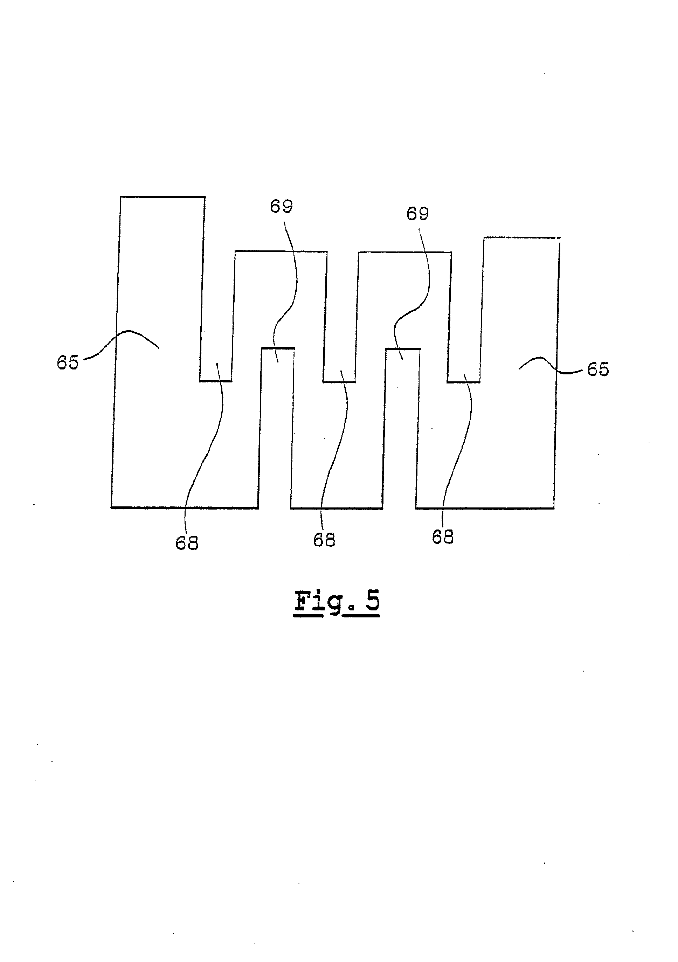

De la sorte, on obtient comme illustré à la figure 5, deux peignes interdigités dont les électrodes (68, 69) sont intercalées les unes entre les autres. Typiquement, la hauteur de ces peignes est de l'ordre de 10 à 100 microns. Pour plus de simplification, le nombre d'électrodes décrit dans les figures 4 et 5 est limité à 5, mais leur nombre peut être adapté en fonction de la structure de l'actionneur.

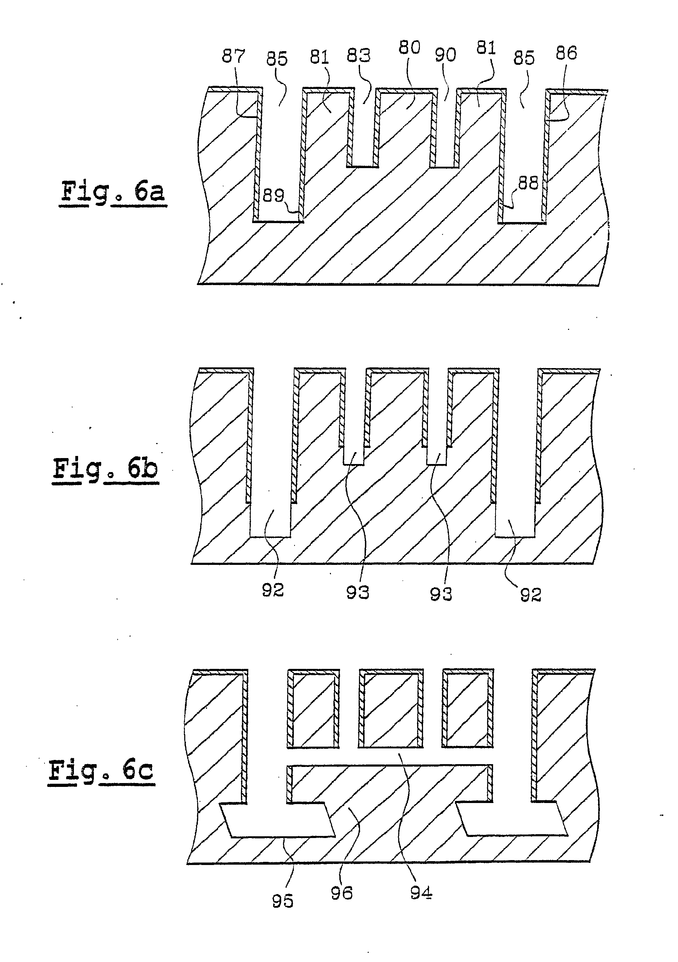

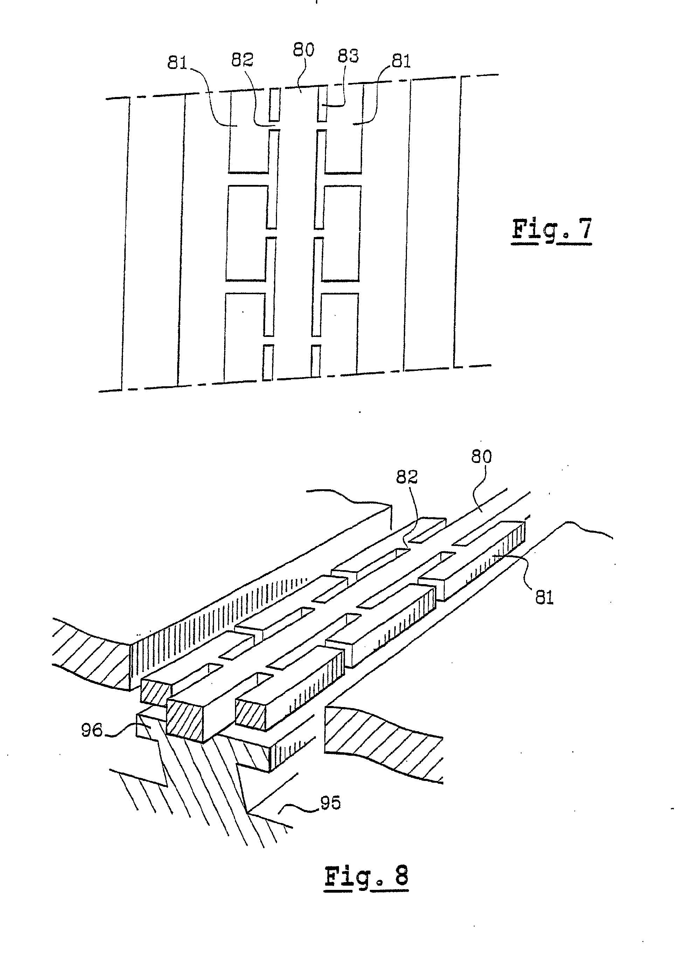

Conformément à une autre caractéristique de l'invention, le procédé permet de définir les poutres des moyens de rappel avec une précision très importante. Ainsi, comme illustré à la figure 6a, on réalise une première étape de gravure profonde, qui délimite la poutre (80) des moyens de rappel ainsi que deux poutrelles latérales (81) situées de part et d'autre de la poutre (80). Comme illustré à la figure 7, les poutrelles (81) sont reliées à la poutre (80) par l'intermédiaire de zones de liaison (82) de très faibles dimensions. Les zones (83) gravées entre la poutre (80) et les poutrelles (81) sont également de faible dimension, typiquement de l'ordre de 3 à 10 microns.

Les futures poutres et poutrelles (80, 81) sont limitées latéralement par des zones (85) qui sont de relativement forte largeur. En effet, l'écart entre les flancs (86, 87) de ces zones (85) correspond à l'espace dans lequel sont destinés à se déplacer les moyens de rappel. Il s'agit donc d'une distance du même ordre que celle du déplacement du miroir. La relativement faible largeur des zones (83) entre la poutre (80) et les poutrelles (81) provoque donc des phénomènes d'effet de charge.
Dans la forme illustrée aux figures 6, les dimensions relatives des zones (85) et (83) sont nettement différentes de la réalité, uniquement dans un but de faciliter la compréhension de certaines caractéristiques du procédé de l'invention. Dans la pratique, les espaces (85) sont beaucoup plus larges que ceux représentés.

Les flancs (90) déterminent de façon prépondérante la section de la poutre (80), et donc les caractéristiques de raideur des moyens de rappel. Cette précision dans la raideur assure une bonne homogénéité des performances des différents composants réalisés avec le même procédé.

Ainsi, après cette première étape de gravure profonde, on procède comme illustré à la figure 6b à une seconde étape de gravure profonde, permettant de définir les zones (92, 93) dans lesquelles s'initiera la gravure humide. Cette gravure humide s'effectue de façon latérale sous la poutre (80) et les poutrelles (81), pour définir la zone (94) au dessus de laquelle se situent la poutre (80) et les poutrelles (81).

La gravure humide initiée à partir des zones latérales (92) définit le fond (95) des espaces dégagés autour des moyens de rappel. Pour éliminer les zones de SiO₂ reliant les poutrelles (81) et le palier (96), on peut procéder à une élimination de l'ensemble de la couche de SiO₂, puis à une oxydation du substrat.

Les faibles dimensions des zones (82) reliant les poutrelles (81) à la poutre (80), comme illustré à la figure 8, font que la raideur globale de l'ensemble est déterminée uniquement par la raideur de la poutre (80). Les poutrelles (81) jouent le rôle de masselotte, mais leur section n'intervient pratiquement pas dans la détermination des propriétés de raideur de la poutre (80).

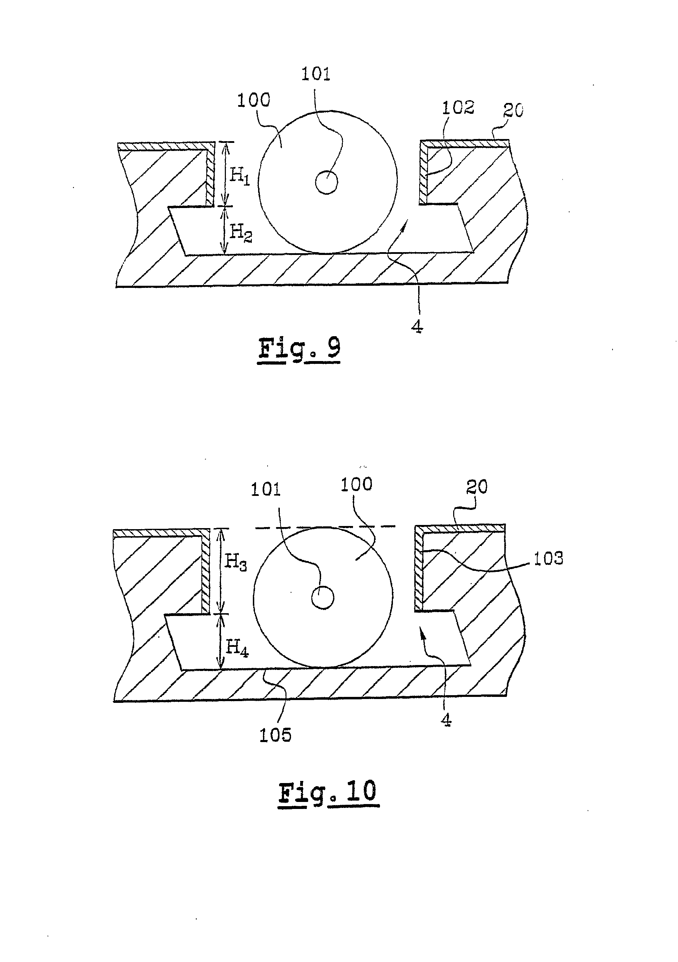

En ce qui concerne la profondeur des guides de propagation, plusieurs hypothèses peuvent être envisagées. Ainsi, comme illustré à la figure 9, la première étape de gravure sèche peut définir une hauteur H₁ relativement limitée, de l'ordre de 10 à 100 microns. Cette hauteur H₁ définira la hauteur du miroir réfléchissant (6). La seconde étape de gravure humide définit la profondeur du guide (4) par rapport à la face supérieure du substrat (20).

L'ensemble des hauteurs H₁ et H₂ peut être choisi de telle sorte que le centre (101) du faisceau issu de la fibre optique (100) soit situé au niveau du centre du miroir, dont la position correspond sensiblement au flanc (102) du guide (4). Dans ce cas, la réflexion ayant lieu dans la partie supérieure du miroir, les qualités réfléchissantes et la planéité sont parfaitement maîtrisées, ce qui donne un comportement optique optimal.

Dans une autre hypothèse, illustrée à la figure 10, la profondeur H₃ de la première étape de gravure sèche est supérieure à la valeur H₁ illustrée à la figure 9, et typiquement de l'ordre de 60 à 100 microns. Dans ce cas, le centre du faisceau (101) issu de la fibre (100) se réfléchit à un niveau plus bas du miroir, correspondant au flanc (103) du guide de propagation (4). Les qualités de réflexion sont donc légèrement inférieures à celles de la forme de réalisation illustrée à la figure 9. En revanche, grâce à la seconde étape de gravure profonde, réalisée sur une profondeur H₄, le fond (105) du guide (4) se trouve éloigné du plan (20) de la face supérieure du substrat d'une distance supérieure ou égale au diamètre des fibres optiques (100). Dans ce cas, les fibres (100) ne dépassent pas du plan supérieur (20) du substrat, ce qui facilite les opérations d'encapsulation.

Bien entendu, les différentes explications données en ce qui concerne la conception d'un commutateur optique peuvent être transposées à la réalisation d'obturateur ou d'atténuateur variable. Dans ce cas, l'orientation de la paroi portant le miroir par rapport au guide de propagation peut être différente. Ces cellules élémentaires peuvent également être agencées pour former des matrices de commutateurs, d'obturateurs ou d'atténuateurs.

Il ressort de ce qui précède que les composants optiques réalisés conformément au procédé de l'invention présentent de multiples avantages et notamment
■ une optimisation du déplacement du miroir, puisque les moyens de rappel sont dimensionnés avec une profondeur indépendante de celle des électrodes, ce qui permet d'une part de diminuer la raideur de ces moyens de rappel et d'augmenter l'effort électrostatique ;
■ une optimisation de la consommation énergétique de l'actionneur, du fait de l'augmentation de la hauteur des électrodes ;
■ une diminution d'occupation en surface de silicium d'un tel microcomposant, ce qui autorise donc la réalisation de composants multiples tels que des matrices de commutateurs ;
■ un procédé de réalisation dont le nombre d'étape est limité.
■ la possibilité de choisir de façon adéquate le positionnement des fibres optiques dans les guides de propagation

## Revendications

1. Procédé de fabrication d'un composant optique microélectromécanique (1), réalisé à partir d'un substrat de silicium, comprenant :
■ au moins deux guides de propagation optique (2-5), notamment destinés à recevoir des fibres optiques ;
■ une paroi mobile (6) par rapport aux guides de propagation (2-5) ;
■ un actionneur électrostatique (10), apte à provoquer le déplacement de la paroi mobile (6) par rapport au reste du substrat (21), ledit actionneur comportant
◆ des électrodes (11, 12) en regard, mobiles les unes par rapport aux autres, une partie des électrodes (12) étant mécaniquement liée à la paroi mobile (6), l'autre partie des électrodes (11) étant solidaire du reste du substrat (21) ;
◆ des moyens de rappel formés par au moins une poutre (15, 16) réalisée dans le substrat, et s'opposant au mouvement des électrodes (11, 12) les unes par rapport aux autres,
**caractérisé en ce que** :
■ le substrat utilisé est en silicium monocristallin dont les plans (111) sont parallèles au plan (20) du substrat ;
■ il comporte une première série d'étapes de gravure ionique réactive profonde pendant lesquelles, sont définies, avec des valeurs différentes, les hauteurs (h₁, h₂, h₃) de la paroi mobile (6), des électrodes de l'actionneur (11, 12), et des poutres (15, 16) des moyens de rappel de l'actionneur;
■ il comporte une seconde étape de gravure humide, permettant de libérer la paroi mobile (6), les électrodes (11, 12) et les poutres (15, 16) du reste du substrat.

2. Procédé selon la revendication 1, **caractérisé en ce qu'**il comporte préalablement aux étapes de gravure ionique réactive profonde, une étape de masquage permettant de définir l'emplacement ultérieur des guides de propagation optique (2-5), de la paroi mobile (6), des électrodes (11, 12) et des moyens de rappel (15, 16) de l'actionneur.

3. Procédé selon la revendication 1, **caractérisé en ce qu'**il comporte deux étapes de gravure ionique réactive profonde successives, à savoir :
■ une première étape de gravure ionique réactive profonde pendant laquelle sont définies les hauteurs de la paroi mobile, des électrodes et des moyens de rappel de l'actionneur ;
■ une seconde étape de gravure ionique réactive profonde pendant laquelle sont définis des volumes à partir desquels peuvent s'initier l'étape subséquente de gravure humide.

4. Procédé selon la revendication 3, **caractérisé en ce qu'**entre les deux étapes de gravure ionique réactive profonde, on procède:
■ tout d'abord à un dépôt (30) de SiO₂ dans les zones initialement gravées,
■ puis à une élimination du dépôt de SiO₂ dans le fond (31) desdites zones initialement gravées.

5. Procédé selon la revendication 1, **caractérisé en ce que**, pendant les étapes de gravure ionique réactive profonde, on définit un ensemble de poutrelles de protection (81), situées de part et d'autre des poutres (80) des moyens de rappels de l'actionneur, lesdites poutrelles (81) étant reliées auxdites poutres (80) par l'intermédiaire de portions de liaison (82) de dimensions réduites, et **en ce que** les poutrelles sont libérées du reste du substrat lors de l'étape de gravure humide.

6. Procédé selon la revendication 1, **caractérisé en ce que** l'on procède à une étape de métallisation postérieurement à l'étape de gravure humide.

7. Composant optique microélectromécanique, réalisé à partir d'une galette de substrat de silicium, comprenant
■ au moins deux guides de propagation optique (2-5), notamment destinés à recevoir des fibres optiques ;
■ une paroi mobile (6) par rapport aux canaux ;
■ un actionneur électrostatique (10), apte à provoquer le déplacement de la paroi mobile (6) par rapport au reste du substrat, ledit actionneur comportant
◆ des électrodes (11, 12) en regard, mobiles les unes par rapport aux autres, une partie des électrodes (12) étant mécaniquement liée à la paroi mobile (6), l'autre partie des électrodes (11) étant solidaire du reste du substrat ;
◆ des moyens de rappel formés par au moins une poutre (15, 16) réalisée dans le substrat, et s'opposant au mouvement des électrodes les unes par rapport aux autres,
**caractérisé en ce que** :
■ le substrat utilisé est en silicium monocristallin dont les plans (111) sont parallèles au plan du substrat ;
■ la paroi mobile (6), les électrodes (11, 12) de l'actionneur, et les poutres (15, 16) des moyens de rappel de l'actionneur possèdent des hauteurs de valeurs différentes;

8. Composant selon la revendication 7, **caractérisé en ce qu'**il présente une couche de métallisation (40) au moins au niveau de la paroi mobile (6) et des électrodes (11, 12).

9. Composant selon la revendication 7, **caractérisé en ce qu'**il comporte en outre des poutrelles de protection (81), situées de part et d'autre des poutres (80) des moyens de rappels de l'actionneur, lesdites poutrelles (81) étant reliées auxdites poutres (80) par l'intennédiaire de portions de liaison (82) de dimensions réduites.

10. Composant selon la revendication 7, **caractérisé en ce qu'**il comporte deux guides de propagation optiques colinéaires.

11. Composant selon la revendication 7, **caractérisé en ce qu'**il comporte deux paires de guides de propagation optique (2-5) colinéaires, chaque paire étant perpendiculaire à l'autre.
